# EUROPEAN PATENT SPECIFICATION

(11) **EP 3 444 056 B1**
(45) Date of publication and mention of the grant of the patent: **08.01.2020**
(21) Application number: 17186140.4
(22) Date of filing: 14.08.2017
(51) Int. Cl.: B23B 31/30, F16J 15/16

(54) **HYDRAULIC CHUCK**
HYDRAULISCHES SPANNFUTTER
MANDRIN HYDRAULIQUE

(43) Date of publication of application: 20.02.2019
(73) Proprietor: Wu, Hsuan-Lung, Nan-Tun Dist. Taichung City 408 (TW)
(72) Inventor: Wu, Hsuan-Lung, Nan-Tun Dist. Taichung City 408 (TW)
(74) Representative: V.O.

(56) References cited:
- EP-A1- 1 568 429
- EP-A2- 0 102 805
- EP-A2- 0 126 851
- DE-A1- 2 838 369
- GB-A- 1 312 199
- US-A- 3 735 670

## Description

The disclosure relates to a hydraulic chuck, and more particularly to a hydraulic chuck according to the preamble of claim 1 with seal means. Such a chuck is known from US 3 735 670 A.

A conventional hydraulic chuck disclosed in Taiwanese Patent No. 557239 includes a chuck body, a fixed seat fixedly mounted in the chuck body, a rotary seat rotatably mounted in the fixed seat, a driving seat moveably mounted to the rotary seat, a front jaw unit, a rear jaw unit, and an oil path that passes through the chuck body, the fixed seat and the rotary seat. When pressurized oil flows through the oil path to move the driving seat, the driving seat drives the front and rear jaw units to grip or to release a workpiece.

A gap through which the pressurized oil flows is formed between an outer surface of the rotary seat and an inner surface of the fixed seat, and a plurality of seal rings may be disposed between the outer surface of the rotary seat and the inner surface of the fixed seat to prevent leakage of the pressurized oil. When the pressurized oil flows through the gap to adjust the front and rear jaw units, the seal rings are deformed by the pressurized oil so as to seal up the gap to prevent leakage of the pressurized oil. When the pressurized oil is prevented from flowing through the gap after the adjustment of the front and rear jaw units, the seal rings are restored to permit relative rotation between the rotary seat and the fixed seat.

However, each of the seal rings may have a circular cross-section, and may not be sufficiently deformed enough to seal up the gap when the pressurized oil flows through. If the pressure of the oil is increased in order to increase the degree of deformation of the seal rings, more serious leakage of the pressurized oil would have occurred.

Moreover, if the seal rings are designed to constantly seal up the gap even when the rotary seat rotates relative to the fixed seat, the seal rings may be easily worn out, and may be deteriorated due to the high-temperature resulted from the frictional contact among the seal rings and the rotary seat.

Therefore, an object of the disclosure is to provide a hydraulic chuck that can alleviate at least one of the drawbacks of the prior art.

According to the invention a hydraulic chuck according to claim 1 is provided. The hydraulic chuck is for griping at least one workpiece, and includes a chuck body, a fixed seat, a rotary seat, a plurality of flexible seal members and a driving seat unit. The fixed seat is fixedly mounted to the chuck body, and has a side surface. The rotary seat is mounted to the fixed seat and is rotatable relative to the fixed seat about a central axis. The rotary seat has a side surface that faces toward the side surface of the fixed seat. The side surface of the fixed seat and the side surface of the rotary seat cooperatively define a gap therebetween that permits pressurized oil to flow therethrough. Each of the seal members is centered at the central axis and has a first annular segment that is fixedly mounted to the fixed seat, a neck segment that extends from the first annular segment and through the gap, and a second annular segment that is connected to an end of the neck segment distal from the first annular segment, that is disposed adjacent to the rotary seat and that cooperated with the first annular segment and the neck segment to define at least one oil groove thereamong. The second annular segments of at least one adjacent pair of the seal members are pushed to be in contact with the rotary seat when the pressurized oil is introduced into the gap. The second annular segments of the seal members are spaced apart from the rotary seat when the pressurized oil is ceased to be introduced into the gap. The driving seat unit is movably mounted to the rotary seat and is moved by the pressurized oil for griping or releasing the workpiece.

Other features and advantages of the invention will become apparent in the following detailed description of the embodiment with reference to the accompanying drawings, of which:
Figure 1 is a sectional view illustrating an embodiment of the hydraulic chuck according to the invention
Figure 2 is an enlarged fragmentary sectional view of the embodiment;
Figure 3 is another enlarged fragmentary sectional view of the embodiment;
Figure 4 is a schematic sectional view illustrating pressurized oil being introduced into a first oil inlet channel of the embodiment;
Figure 5 is a schematic enlarged fragmentary sectional view illustrating the pressurized oil being introduced into the first oil inlet channel;
Figure 6 is a schematic sectional view illustrating the pressurized oil being introduced into a second oil inlet channel of the embodiment; and
Figure 7 is a schematic enlarged fragmentary sectional view illustrating the pressurized oil being introduced into the second oil inlet channel.

Before the chuck of the invention is described in greater detail, it should be noted that where considered appropriate, reference numerals or terminal portions of reference numerals have been repeated among the figures to indicate corresponding or analogous elements, which may optionally have similar characteristics.

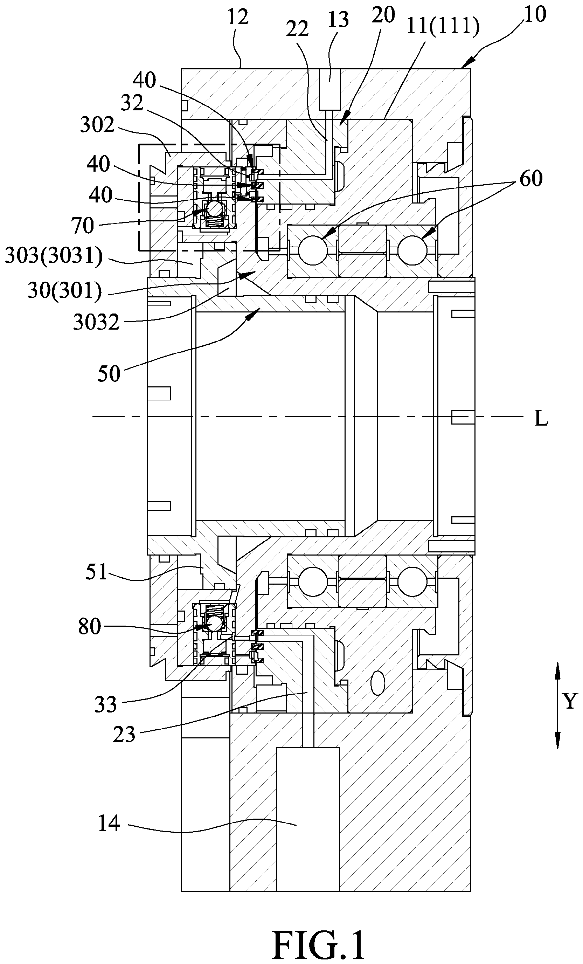

Referring to Figures 1 to 3, the embodiment of the hydraulic chuck according to the invention is for griping at least one workpiece, and includes a chuck body 10, a fixed seat 20, a rotary seat 30, a plurality of flexible seal members 40, a driving unit 50, two bearings 60 that are mounted between the fixed seat 20 and the rotary seat 30, a first one-way valve 70 and a second one-way valve 80.

The chuck body 10 has an inner surrounding surface 11 that defines an inner hole 111, an outer surrounding surface 12 that is opposite to the inner surrounding surface 11, a first guide hole 13 that is formed through the inner and outer surrounding surfaces 11, 12, and a second guide hole 14 that is formed through the inner and outer surrounding surfaces 11, 12 and that is spaced apart from the first guide hole 13. The inner hole 111 extends along a central axis (L).

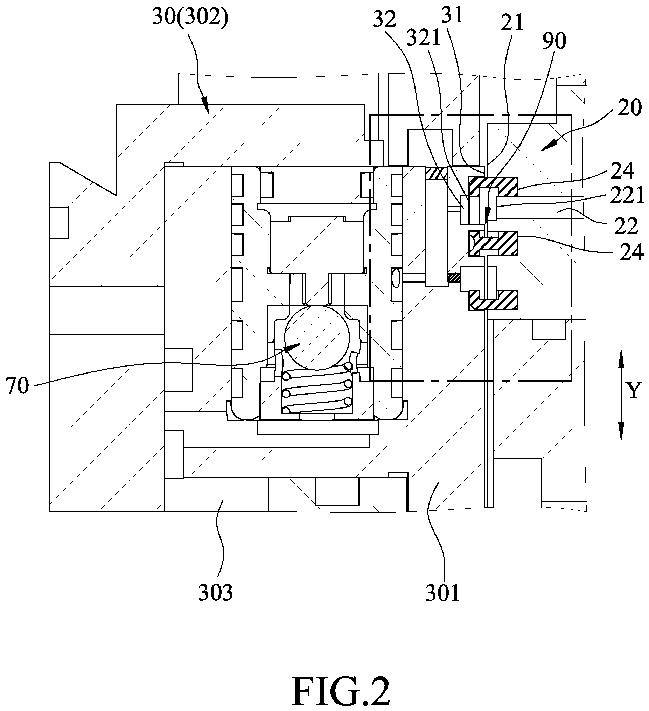

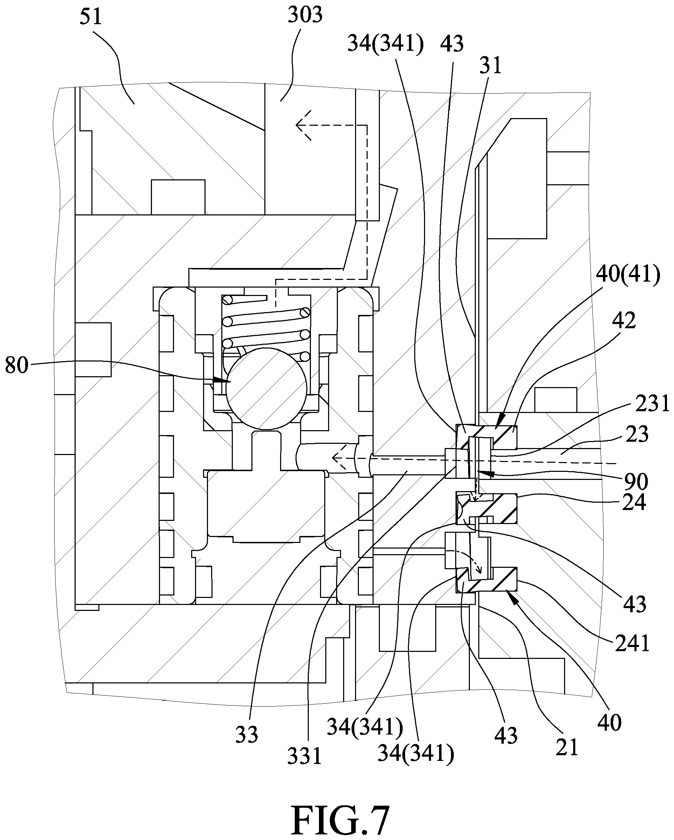

The fixed seat 20 is fixedly mounted to the inner hole 111 of the chuck body 10, and has a side surface 21 that is substantially perpendicular to the central axis (L), a first oil inlet channel 22 that is in fluid communication with the first guide hole 13 and that has a first opening 221 (see Figure 2) formed through the side surface 21, a second oil inlet channel 23 that is in fluid communication with the second guide hole 14 and that has a second opening 231 (see Figure 7) formed through the side surface 21, and a plurality of fixed annular grooves 24 that are formed in the side surface 21. A distance between the first opening 221 of the first oil inlet channel 22 and the central axis (L) is different from that between the second opening 231 of the second oil inlet channel 23 and the central axis (L). Each of the fixed annular grooves 24 is centered at the central axis (L) and is spaced apart from the other fixed annular grooves 24 in a radial direction (Y).

A distance between at least one of the fixed annular grooves 24 and the central axis (L) is greater than either of the distance between the first opening 221 of the first oil inlet channel 22 and the central axis (L) and the distance between the second opening 231 of the second oil inlet channel 23 and the central axis (L) . A distance between at least one of the fixed annular grooves 24 and the central axis (L) is smaller than either of the distance between the first opening 221 of the first oil inlet channel 22 and the central axis (L) and the distance between the second opening 231 of the second oil inlet channel 23 and the central axis (L). A distance between at least one of the fixed annular grooves 24 and the central axis (L) falls between the distance between the first opening 221 of the first oil inlet channel 22 and the central axis (L) and the distance between the second opening 231 of the second oil inlet channel 23 and the central axis (L). The first opening 221 of the first oil inlet channel 22 is in fluid communication with a space between an adjacent pair of the fixed annular grooves 24, and the second opening 231 of the second oil inlet channel 23 is in fluid communication with a space between another adjacent pair of the fixed annular grooves 24.

In this embodiment, the fixed seat 20 has three fixed annular grooves 24 each of which is centered at the central axis (L) and is spaced apart from the other fixed annular grooves 24 in the radial direction (Y) . The first opening 221 of the first oil inlet channel 22 is in fluid communication with a space between the outer one and the middle one of the fixed annular grooves 24, and the second opening 231 of the second oil inlet channel 23 is in fluid communication with a space between the middle one and the inner one of the fixed annular grooves 24.

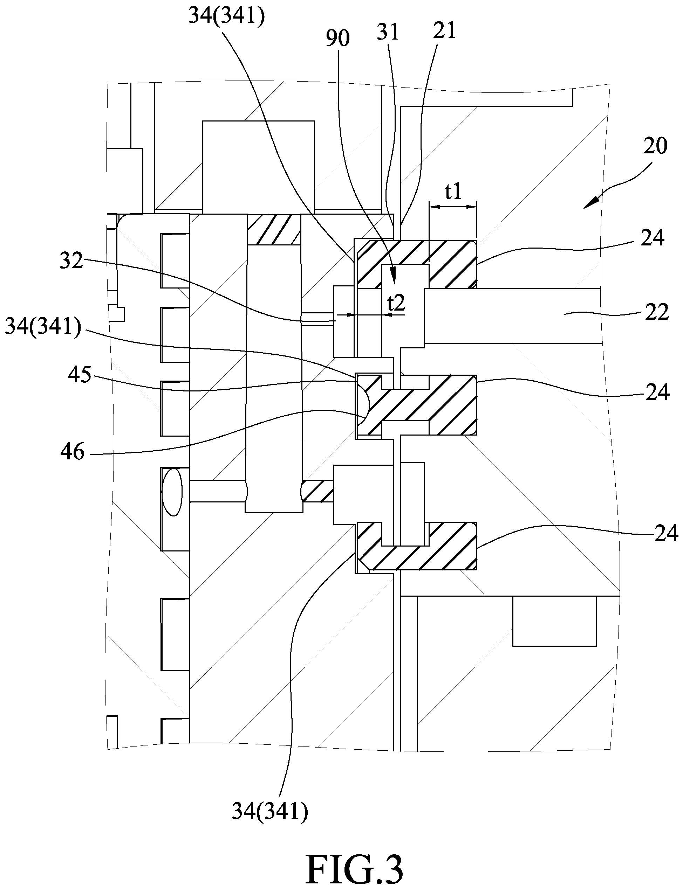

The rotary seat 30 is mounted to the fixed seat 20, and is rotatable relative to the fixed seat 20 about the central axis (L) . The rotary seat 30 includes a main body 301, and an auxiliary body 302 that is co-rotatably mounted to the main body 301 and that cooperates with the main body 301 to define an operating space 303 therebetween. The main body 301 has a side surface 31 that is substantially perpendicular to the central axis (L) and that faces toward the side surface 21 of the fixed seat 20, a first oil path 32 that is in fluid communication with the operating space 303 and that has a first opening 321 (see Figure 2) formed through the side surface 31, a second oil path 33 that is in fluid communication with the operating space 303 and that has a second opening 331 (see Figure 7) formed through the side surface 31, and a plurality of rotary annular grooves 34 that are formed in the side surface 31 and that are respectively aligned with the fixed annular grooves 24 in the direction of the central axis (L). A distance between the first opening 321 of the first oil path 32 and the central axis (L) is different from that between the second opening 331 of the second oil path 33 and the central axis (L). The first opening 321 of the first oil path 32 is in fluid communication with a space between an adjacent pair of the rotary annular grooves 34, and the second opening 331 of the second oil path 33 is in fluid communication with a space between another adjacent pair of the rotary annular grooves 34. Each of the rotary annular grooves 34 is defined by a groove-defining surface 341 (see Figures 3, 5 and 7) . The first oil path 32 and the second oil path 33 are respectively in fluid communication with two opposite ends of the operating space 303 along the central axis (L). The side surface 21 of the fixed seat 20 and the side surface 31 of the rotary seat 30 cooperatively define a gap 90 therebetween that permits pressurized oil to flow therethrough and that is in fluid communication with the first and second oil inlet channels 22, 23 and the first and second oil paths 32, 33.

In this embodiment, the rotary seat 30 has three rotary annular grooves 34 that are respectively aligned with the fixed annular grooves 24 in the direction of the central axis (L) . The first opening 321 of the first oil path 32 is in fluid communication with a space between the outer one and the middle one of the rotary annular grooves 34, and the second opening 331 of the second oil path 33 is in fluid communication with a space between the middle one and the inner one of the rotary annular grooves 34. The rotary seat 30 further includes a first backflowpath (not shown) that is in fluid communication with the operating space 303 and the space between the middle one and the inner one of the rotary annular grooves 34, and a second backflow path (not shown) that is in fluid communication with the operating space 303 and the space between the outer one and the middle one of the rotary annular grooves 34.

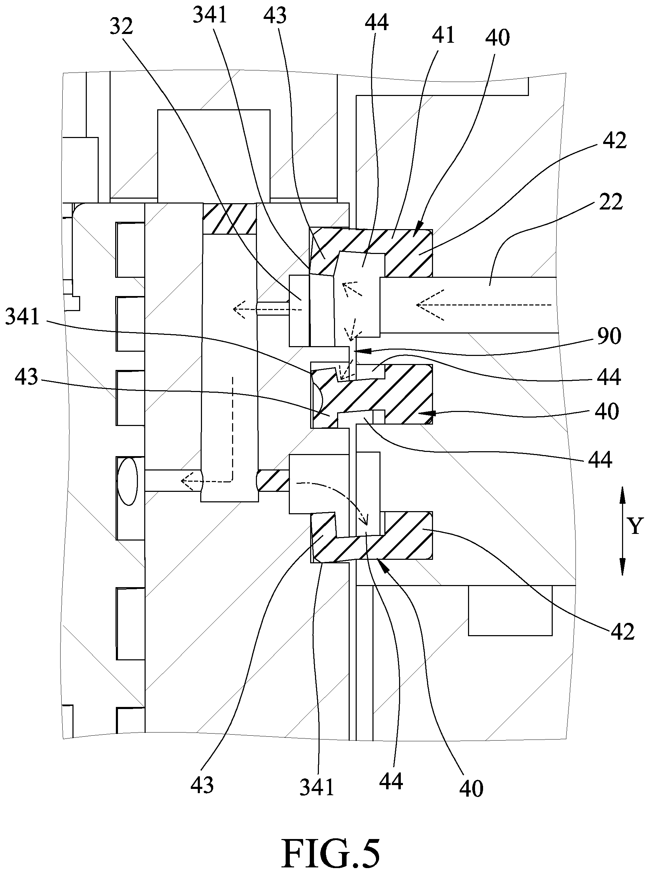

With further reference to Figures 5 and 7, each of the seal members 40 has a first annular segment 42 that is fixedly mounted to a respective one of the fixed annular grooves 24, a neck segment 41 that extends from the first annular segment 42 through the gap 90 into the corresponding one of the rotary annular grooves 34 that is aligned with the respective one of the fixed annular grooves 24, and a second annular segment 43 that is connected to the neck segment 41, that is movably retained in the corresponding one of the rotary annular grooves 34 and that cooperates with the first annular segment 42 and the neck segment 41 to define at least one oil groove 44 thereamong (see Figure 5). For each of the seal members 40, the thickness of the second annular segment 43 in the radial direction (Y) is smaller than the width of the corresponding one of the rotary annular grooves 34 in the radial direction (Y), and the thickness (t2, see Figure 3) of the second annular segment 43 in the direction of the central axis (L) is smaller than the thickness (t1, see Figure 3) of the first annular segment 42 in the direction of the central axis (L). A distance between at least one of the seal members 40 and the central axis (L) is greater than either of the distance between the first opening 321 of the first oil path 32 and the central axis (L) and the distance between the second opening 331 of the second oil path 33 and the central axis (L) . A distance between at least one of the seal members 40 and the central axis (L) is smaller than either of the distance between the first opening 321 of the first oil path 32 and the central axis (L) and the distance between the second opening 331 of the second oil path 33 and the central axis (L) . A distance between at least one of the seal members 40 and the central axis (L) falls between the distance between the first opening 321 of the first oil path 32 and the central axis (L) and the distance between the second opening 331 of the second oil path 33 and the central axis (L).

In this embodiment, there are three seal members 40 that are respectively and fixedly mounted to the fixed annular grooves 24 and that respectively extend into the rotary annular grooves 34 through the gap 90. The second annular segment 43 of the middle one of the seal members 40 has an end surface 45 that faces away from the first annular segment 42, and a U-groove 46 that is formed in the end surface 45. The U-groove 46 serves to increase the flexibility of the middle one of the seal members 40. The first annular segment 42, the neck segment 41 and the second annular segment 43 of each of the inner one and the outer one of the seal members 40 cooperatively define an oil groove 44 thereamong. The first annular segment 42, the neck segment 41 and the second annular segment 43 of each of the middle one of the seal members 40 cooperatively define two oil grooves 44 thereamong that faces away from each other.

In one embodiment, for each of the seal members 40, the thickness of the neck segment 41 in the radial direction (Y) is smaller than the thickness of the first annular segment 42 in the radial direction (Y) and smaller than the thickness of the second annular segment 43 in the radial direction (Y).

The driving unit 50 includes a driving seat 51 that is movably mounted to the rotary seat 30 and that divides the operating space 303 into first and second space portions 3031, 3032 that are disposed along the central axis (L). The first oil path 32 and the second oil path 33 are respectively in fluid communication with the first and second space portions 3031, 3032 of the operating space 303. The driving seat 51 can be moved by pressurized oil introduced into the first or second space portion 3031, 3032, and cooperates with a cap member (not shown), a jaw unit (not shown) and a pull rod (not shown) in a known manner to grip or release the workpiece.

The first one-way valve 70 is mounted in the main body 301 of the rotary seat 30, and is disposed on the first oil path 32. The first one-way valve 70 permits the pressurized oil to flow from the first oil inlet channel 22 into the first space portion 3031 of the operating space 303 therethrough, and prevents the pressurized oil from flowing from the first space portion 3031 of the operating space 303 back to the first oil inlet channel 22 therethrough.

The second one-way valve 80 is mounted in the main body 301 of the rotary seat 30, and is disposed on the second oil path 33. The second one-way valve 80 permits the pressurized oil to flow from the second oil inlet channel 23 into the second space portion 3032 of the operating space 303 therethrough, and prevents the pressurized oil from flowing from the second space portion 3032 of the operating space 303 back to the second oil inlet channel 23 therethrough. The operation of the first and second one-way valves 70, 80 are known in the art.

Referring to Figures 1 to 3, when the pressurized oil is not introduced into the first guide hole 13 or the second guide hole 14, the second annular segment 43 of each of the seal members 40 (see Figures 5 and 7) is spaced apart from the groove-defining surface 341 of the corresponding one of the rotary annular grooves 34. Thus, the rotary seat 30 is permitted to rotate relative to the fixed seat 20 without being in contact with the seal members 40, and the seal members 40 are therefore prevented from deterioration due to high temperature.

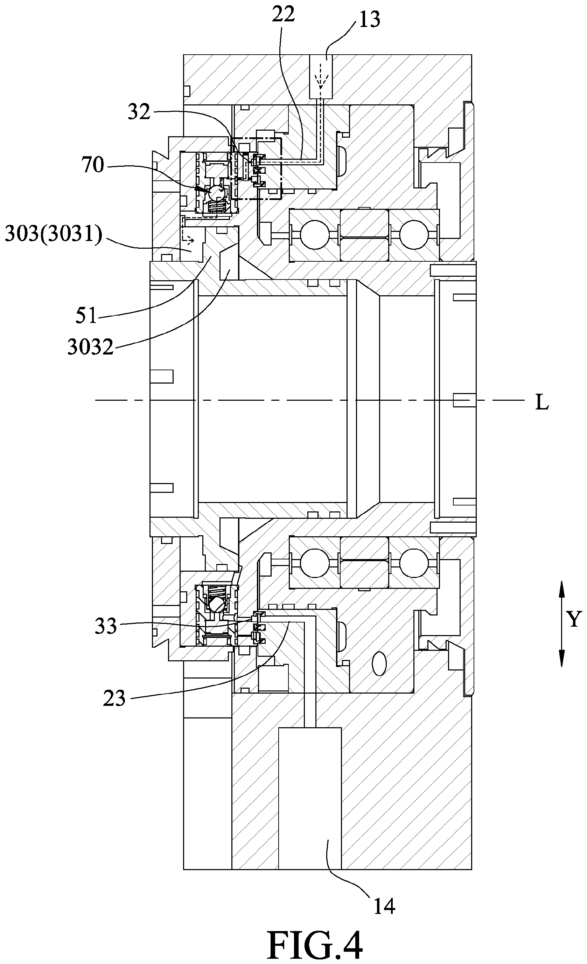

Referring to Figures 4 and 5, when the pressurized oil is introduced into the first guide hole 13 and flows through the first oil inlet channel 22, the gap 90, the first oil path 32 and the first one-way valve 70, and into the first space portion 3031 of the operating space 303 to move the driving seat 51 toward the right side of Figure 4 (see the arrows represented by dotted broken lines in Figures 4 and 5), the outer one of the seal members 40 and the middle one of the seal members 40 are pushed by the pressurized oil to deform away from each other, such that the second annular segment 43 of the outer one of the seal members 40 is in contact with the groove-defining surface 341 defining the corresponding rotary annular groove 34 and that the second annular segment 43 of the middle one of the seal members 40 is in contact with the groove-defining surface 341 defining the corresponding rotary annular groove 34, so as to prevent outflow of the pressurized oil from the space between the outer one of the seal members 40 and the middle one of the seal members 40 and to prevent inflow of the pressurized oil into the second oil inlet channel 23 and the second oil path 33. At the same time, the low-pressure oil in the second space portion 3032 of the operating space 303 is forced to flow through the first backflow path (not shown) and the space between the middle one and the inner one of the rotary annular grooves 34 (see the arrow represented by dash-dot broken lines in Figure 5) to push the inner one of the seal members 40 to deform inwardly, such that the second annular segment 43 of the inner one of the seal members 40 is in contact with the groove-defining surface 341 defining the inner one of the rotary annular grooves 34 so as to prevent outflow of the low-pressure oil from the space between the middle one and the inner one of the rotary annular grooves 34. When the pressurized oil has ceased to be introduced into the first guide hole 13 after the movement of the driving seat 51, the seal members 40 are restored to the state illustrated in Figure 3, and the rotary seat 30 is permitted to rotate relative to the fixed seat 20 without being in contact with the seal members 40.

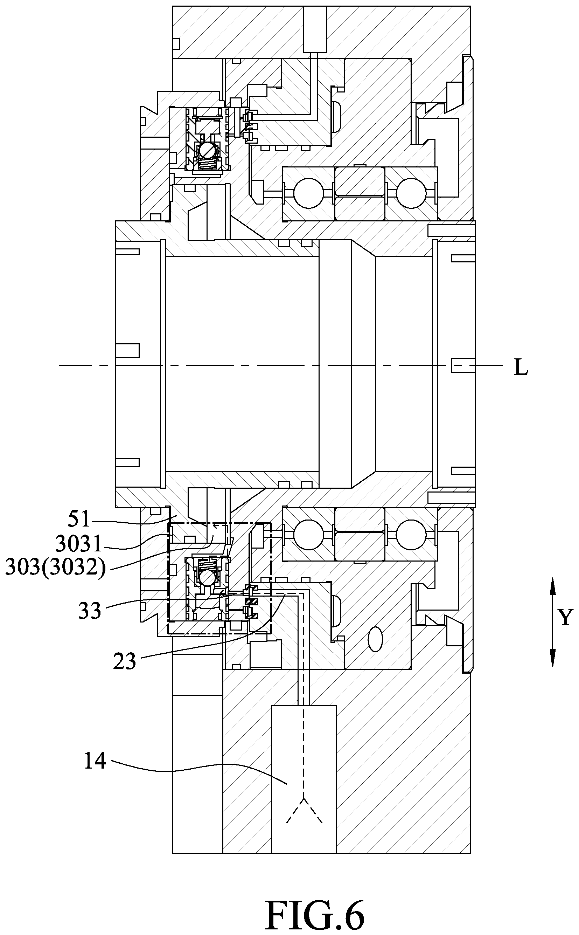

Referring to Figures 6 and 7, when the pressurized oil is introduced into the second guide hole 14 and flows through the second oil inlet channel 23, the gap 90, the second oil path 33 and the second one-way valve 80 and flows into the second space portion 3032 of the operating space 303 to move the driving seat 51 toward the left side of Figure 6 (see the arrows represented by dotted broken lines in Figures 6 and 7), the inner one of the seal members 40 and the middle one of the seal members 40 are pushed by the pressurized oil to deform away from each other, such that the second annular segment 43 of the inner one of the seal members 40 is in contact with the groove-defining surface 341 defining the corresponding rotary annular groove 34 and that the second annular segment 43 of the middle one of the seal members 40 is in contact with the groove-defining surface 341 defining the corresponding rotary annular groove 34, so as to prevent outflow of the pressurized oil from the space between the inner one of the seal members 40 and the middle one of the seal members 40 and inflow of the pressurized oil into the first oil inlet channel 22 and the first oil path 32. At the same time, the low-pressure oil in the first space portion 3031 of the operating space 303 is forced to flow through the second backflow path (not shown) and the space between the middle one and the outer one of the rotary annular grooves 34 (see the arrow represented by dash-dot broken lines in Figure 7) to push the outer one of the seal members 40 to deform outwardly, such that the second annular segment 43 of the outer one of the seal members 40 is in contact with the groove-defining surface 341 defining the outer one of the rotary annular grooves 34 so as to prevent outflow of the low-pressure oil from the space between the middle one and the outer one of the rotary annular grooves 34. When the pressurized oil has ceased to be introduced into the second guide hole 14 after the movement of the driving seat 51, the seal members 40 are restored to the state illustrated in Figure 3, and the rotary seat 30 is permitted to rotate relative to the fixed seat 20 without being in contact with the seal members 40. Thus, the seal members 40 may be prevented from deterioration due to high temperature, extending its service life.

By virtue of the configuration of each of the seal members 40, when the pressurized oil is introduced into the first guide hole 13 or the second guide hole 14 to move the driving seat 51, the seal members 40 can be easily deformed by the pressurized oil to seal the gap 90. When the pressurized oil is ceased to be introduced into the first and second guide holes 13, 14 after the movement of the driving seat 51, the seal members 40 are restored to be spaced apart from the rotary seat 30, so that the rotary seat 30 is permitted to rotate relative to the fixed seat 20 without being in contact with the seal members 40, and that the seal members 40 are prevented from deterioration due to high temperature.

Moreover, since the U-groove 46 serves to increase the flexibility of the middle one of the seal members 40, the fluid-tightness of the middle one of the seal members 40 is enhanced when the pressurized oil is introduced into the first guide hole 13 or the second guide hole 14 for moving the driving seat 51.

## Claims

1. A hydraulic chuck adapted to grip at least one workpiece, comprising:
a chuck body (10);
a fixed seat (20) fixedly mounted to said chuck body (10), and having a side surface (21);
a rotary seat (30) mounted to said fixed seat (20) and rotatable relative to said fixed seat (20) about a central axis (L), said rotary seat (30) having a side surface (31) that faces toward said side surface (21) of said fixed seat (20), said side surface (21) of said fixed seat (20) and said side surface (31) of said rotary seat (30) cooperatively defining a gap (90) therebetween that permits pressurized oil to flow therethrough;
a plurality of flexible seal members (40) each being centered at the central axis (L) and
a driving set unit (50) movably mounted to said rotary seat (30) and moved by the pressurized oil for gripping or releasing the workpiece,
**characterized in that**
each flexible seal member has a first annular segment (42) that is fixedly mounted to said fixed seat (20), a neck segment (41) that extends from said first annular segment (42) and through said gap (90), and a second annular segment (43) that is connected to an end of said neck segment (41) distal from said first annular segment (42), that is disposed adjacent to said rotary seat (30) and that cooperated with said first annular segment (42) and said neck segment (41) to define at least one oil groove (44) thereamong, said second annular segments (43) of at least one adjacent pair of said seal members (40) being pushed to be in contact with said rotary seat (30) when the pressurized oil is introduced into said gap (90), said second annular segments (43) of said seal members (40) being spaced apart from said rotary seat (30) when the pressurized oil is ceased to be introduced into said gap (90).

2. The hydraulic chuck as claimed in claim 1, **characterized in that** said fixed seat (20) further has a first oil inlet channel (22) that has a first opening (221) formed through said side surface (21) of said fixed seat (20), a second oil inlet channel (23) that has a second opening (231) formed through said side surface (21) of said fixed seat (20), a distance between said first opening (221) of said first oil inlet channel (22) and the central axis (L) being different from that between said second opening (231) of said second oil inlet channel (23) and the central axis (L), said rotary seat (30) including a main body (301), and an auxiliary body (302) that is co-rotatably mounted to said main body (301) and that cooperates with said main body (301) to define an operating space (303) therebetween, said main body (301) having said side surface (31) of said rotary seat (30), a first oil path (32) that is in fluid communication with said operating space (303) and said first oil inlet channel (22) and that has a first opening (321) formed through said side surface (31) of said rotary seat (30), a second oil path (33) that is in fluid communication with said operating space (303) and said second oil inlet channel (23) and that has a second opening (331) formed through said side surface (31) of said rotary seat (30), a distance between said first opening (321) of said first oil path (32) and the central axis (L) being different from that between said second opening (331) of said second oil path (33) and the central axis (L), said first oil path (32) and said second oil path (33) being respectively in fluid communication with two opposite ends of said operating space 303 along the central axis (L).

3. The hydraulic chuck as claimed in claim 2, further **characterized in that** a distance between at least one of said seal members (40) and the central axis (L) is greater than either of the distance between said first opening (321) of said first oil path (32) and the central axis (L) and the distance between said second opening (331) of said second oil path (33) and the central axis (L), a distance between at least one of said seal members (40) and the central axis (L) is smaller than either of the distance between said first opening (321) of said first oil path (32) and the central axis (L) and the distance between said second opening (331) of said second oil path (33) and the central axis (L), and a distance between at least one of said seal members (40) and the central axis (L) falls between the distance between said first opening (321) of said first oil path (32) and the central axis (L) and the distance between said second opening (331) of said second oil path (33) and the central axis (L).

4. The hydraulic chuck as claimed in claim 3, further **characterized in that** a distance between only one of said seal members (40) and the central axis (L) falls between the distance between said first opening (321) of said first oil path (32) and the central axis (L) and the distance between said second opening (331) of said second oil path (33) and the central axis (L).

5. The hydraulic chuck as claimed in claim 4, further **characterized in that** said side surface (21) of said fixed seat (20) and said side surface (31) of said rotary seat (30) are perpendicular to the central axis (L), said fixed seat 20 further having a plurality of fixed annular grooves (24) that are formed in said side surface (21) of said fixed seat (20), a distance between at least one of said fixed annular grooves (24) and the central axis (L) being greater than either of the distance between said first opening (221) of said first oil inlet channel (22) and the central axis (L) and the distance between said second opening (231) of said second oil inlet channel (23) and the central axis (L), a distance between at least one of said fixed annular grooves (24) and the central axis (L) being smaller than either of the distance between said first opening (221) of said first oil inlet channel (22) and the central axis (L) and the distance between said second opening (231) of said second oil inlet channel (23) and the central axis (L), a distance between only one of said fixed annular grooves (24) and the central axis (L) falling between the distance between said first opening (221) of said first oil inlet channel (22) and the central axis (L) and the distance between said second opening (231) of said second oil inlet channel (23) and the central axis (L), said first annular segment (42) of each of said seal members (40) being fixedly mounted to a respective one of said fixed annular grooves (24), said main body (31) of said rotary seat (30) further having a plurality of rotary annular grooves (34) that are formed in said side surface (31) of said rotary seat (30) and that are respectively aligned with said fixed annular grooves (24) in the direction of the central axis (L), said second annular segment (42) of each of said seal members (40) being movably retained in a corresponding one of said rotary annular grooves (34), each of said rotary annular grooves (34) being defined by a groove-defining surface (341), for each of said seal members (40), the thickness of said second annular segment (43) in a radial direction (Y) is smaller than the width of the corresponding one of said rotary annular grooves (34) in the radial direction (Y), said second annular segments (43) of at least one adjacent pair of said seal members (40) being pushed to be in contact with said groove-defining surfaces (341) that respectively define the corresponding pair of said rotary annular grooves (34) when the pressurized oil is introduced into said gap (90) .

6. The hydraulic chuck as claimed in claim 5, further **characterized by** a first one-way valve (70) that is mounted in said main body (301) of said rotary seat (30) and that is disposed on said first oil path (32), said first one-way valve (70) permitting the pressurized oil to flow from said first oil inlet channel (22) into said operating space (303) therethrough, and preventing the pressurized oil from flowing from said operating space (303) back to said first oil inlet channel (22) therethrough.

7. The hydraulic chuck as claimed in claim 6, further **characterized by** a second one-way valve (80) that is mounted in said main body (301) of said rotary seat (30) and that is disposed on said second oil path (33), said second one-way valve (80) permitting the pressurized oil to flow from said second oil inlet channel (23) into said operating space (303) therethrough, and preventing the pressurized oil from flowing from said operating space (303) back to said second oil inlet channel (23) therethrough.

8. The hydraulic chuck as claimed in claim 1, **characterized in that**, for each of said seal members (40), the thickness (t2) of said second annular segment (43) in the direction of the central axis (L) is smaller than the thickness (t1) of said first annular segment (42) in the direction of the central axis (L).

## Patentansprüche

1. Hydraulisches Spannfutter zum Greifen wenigstens eines Werkstücks, umfassend:
einen Spannfutterkörper (10);
einen festen Sitz (20), der an dem Spannfutterkörper fest montiert ist (10) und eine Seitenfläche (21) aufweist;
einen Drehsitz (30), der an dem festen Sitz (20) montiert und relativ zu dem festen Sitz (20) um eine Mittelachse (L) drehbar ist, wobei der Drehsitz (30) eine Seitenfläche (31) aufweist, die zu der Seitenfläche (21) des festen Sitzes (20) weist, wobei die Seitenfläche (21) des festen Sitzes (20) und die Seitenfläche (31) des Drehsitzes (30) zusammen einen Spalt (90) dazwischen definieren, der Fließen von unter Druck stehendem Öl dadurch erlaubt;
mehrere flexible Dichtungselemente (40), die jeweils auf der Mittelachse (L) zentriert sind, und eine Antriebssitzeinheit (50), die an dem Drehsitz (30) beweglich montiert ist und durch das unter Druck stehende Öl zum Greifen oder Lösen des Werkstücks bewegt wird,
**dadurch gekennzeichnet, dass**
jedes flexible Dichtungselement ein erstes ringförmiges Segment (42) aufweist, das an dem festen Sitz (20) fest montiert ist, ein Halssegment (41), das sich von dem ersten ringförmigen Segment (42) und durch den Spalt (90) erstreckt, und ein zweites ringförmiges Segment (43), das mit einem von dem ersten ringförmigen Segment (42) distalen Ende des Halsabschnitts (41) verbunden ist, das benachbart zu dem Drehsitz (30) angeordnet ist und das mit dem ersten ringförmigen Segment (42) und dem Halssegment (41) zusammenwirkt, um wenigstens eine Ölnut (44) darunter zu definieren, wobei die zweiten ringförmigen Segmente (43) von wenigstens einem benachbarten Paar der Dichtungselemente (40) so gedrückt werden, dass sie mit dem Drehsitz (30) in Kontakt stehen, wenn das unter Druck stehende Öl in den Spalt (90) eingeführt wird, wobei die zweiten ringförmigen Segmente (43) der Dichtungselemente (40) von dem Drehsitz (30) beabstandet sind, wenn das unter Druck stehende Öl in den Spalt (90) nicht mehr eingeführt wird.

2. Hydraulisches Spannfutter nach Anspruch 1, **dadurch gekennzeichnet, dass** der feste Sitz (20) ferner einen ersten Öleinlasskanal (22) aufweist, der eine erste Öffnung (221) aufweist, die durch die Seitenfläche (21) des festen Sitzes (20) ausgebildet ist, einen zweiten Öleinlasskanal (23), der eine zweite Öffnung (231) aufweist, die durch die Seitenfläche (21) des festen Sitzes (20) ausgebildet ist, wobei sich ein Abstand zwischen der ersten Öffnung (221) des ersten Öleinlasskanals (22) und der Mittelachse (L) von dem zwischen der zweiten Öffnung (231) des zweiten Öleinlasskanals (23) und der Mittelachse (L) unterscheidet, wobei der Drehsitz (30) einen Hauptkörper (301) und einen Hilfskörper (302) umfasst, der gemeinsam drehbar an dem Hauptkörper (301) montiert ist und der mit dem Hauptkörper (301) zusammenwirkt, um einen Betriebsraum (303) dazwischen zu definieren, wobei der Hauptkörper (301) die Seitenfläche (31) des Drehsitzes (30), einen ersten Ölpfad (32) aufweist, der in Fluidverbindung mit dem Betriebsraum (303) und dem ersten Öleinlasskanal (22) steht und der eine erste Öffnung (321) aufweist, die durch die Seitenfläche (31) des Drehsitzes (30) ausgebildet ist, einen zweiten Ölpfad (33), der mit dem Betriebsraum (303) und dem zweiten Öleinlasskanal (23) in Fluidverbindung steht und der eine zweite Öffnung (331) aufweist, die durch die Seitenfläche (31) des Drehsitzes (30) ausgebildet ist, wobei sich ein Abstand zwischen der ersten Öffnung (321) des ersten Ölpfads (32) und der Mittelachse (L) von demjenigen zwischen der zweiten Öffnung (331) des zweiten Ölpfads (33) und der Mittelachse (L) unterscheidet, wobei der erste Ölpfad (32) und der zweite Ölpfad (33) jeweils in Fluidverbindung mit zwei gegenüberliegenden Enden des Betriebsraums 303 entlang der Mittelachse (L) sind.

3. Hydraulisches Spannfutter nach Anspruch 2, ferner **dadurch gekennzeichnet, dass** ein Abstand zwischen wenigstens einem der Dichtungselemente (40) und der Mittelachse (L) größer ist als einer der Abstände zwischen der ersten Öffnung (321) des ersten Ölpfad (32) und der Mittelachse (L) und der Abstand zwischen der zweiten Öffnung (331) des zweiten Ölpfads (33) und der Mittelachse (L) ein Abstand zwischen wenigstens einem der Dichtungselemente (40)) und der Mittelachse (L) kleiner als entweder der Abstand zwischen der ersten Öffnung (321) des ersten Ölpfads (32) und der Mittelachse (L) oder der Abstand zwischen der zweiten Öffnung (331) des zweiten Ölpfad (33) und der Mittelachse (L) ist, und ein Abstand zwischen wenigstens einem der Dichtungselemente (40) und der Mittelachse (L) zwischen dem Abstand zwischen der ersten Öffnung (321) des ersten Ölpfads (32) und der Mittelachse (L) und dem Abstand zwischen der zweiten Öffnung (331) des zweiten Ölpfads (33) und der Mittelachse (L) liegt.

4. Hydraulisches Spannfutter nach Anspruch 3, ferner **dadurch gekennzeichnet, dass** ein Abstand zwischen nur einem der Dichtungselemente (40) und der Mittelachse (L) zwischen dem Abstand zwischen der ersten Öffnung (321) des ersten Ölpfads (32) und der Mittelachse (L) und dem Abstand zwischen der zweiten Öffnung (331) des zweiten Ölpfads (33) und der Mittelachse (L) liegt.

5. Hydraulisches Spannfutter nach Anspruch 4, ferner **dadurch gekennzeichnet, dass** die Seitenfläche (21) des festen Sitzes (20) und die Seitenfläche (31) des Drehsitzes (30) senkrecht zur Mittelachse (L) sind, wobei der feste Sitz 20 ferner mehrere feste ringförmige Nuten (24) aufweist, die in der Seitenfläche (21) des festen Sitzes (20) ausgebildet sind, wobei ein Abstand zwischen wenigstens einer der festen ringförmigen Nuten (24) und der Mittelachse (L) größer ist als der Abstand zwischen der ersten Öffnung (221) des ersten Öleinlasskanals (22) und der Mittelachse (L) und der Abstand zwischen der zweiten Öffnung (231) des zweiten Öleinlasskanals (23) und der Mittelachse (L), wobei ein Abstand zwischen wenigstens einer der festen ringförmigen Nuten (24) und der Mittelachse (L) kleiner ist als einer der Abstände zwischen der ersten Öffnung (221) des ersten Öleinlasskanals (22) und der Mittelachse (L) und der Abstand zwischen der zweiten Öffnung (231) des zweiten Öleinlasskanals (23) und der Mittelachse (L), wobei ein Abstand zwischen nur einer der festen ringförmigen Nuten (24) und der Mittelachse (L) zwischen dem Abstand zwischen der ersten Öffnung (221) des ersten Öleinlasskanals (22) und der Mittelachse (L) und dem Abstand zwischen der zweiten Öffnung (231) des zweiten Öleinlasskanals (23) und der Mittelachse (L) liegt, wobei das erste ringförmige Segment (42) jedes der Dichtungselemente (40) an einer jeweiligen der festen ringförmigen Nuten (24) fest montiert ist, wobei der Hauptkörper (31) des Drehsitzes (30) ferner mehrere drehbare ringförmige Nuten (34) aufweist, die in der Seitenfläche (31) des Drehsitzes (30) ausgebildet sind und die jeweils mit den festen ringförmigen Nuten (24) in Richtung der Mittelachse (L) ausgerichtet sind, wobei das zweite ringförmige Segment (42) jedes der Dichtungselemente (40) beweglich in einer entsprechenden der drehbaren ringförmigen Nuten (34) gehalten wird, wobei jede der drehbaren ringförmigen Nuten (34) durch eine Nut definierende Oberfläche (341) für jedes der Dichtungselemente (40) definiert wird, die Dicke des zweiten ringförmigen Segments (43) in einer radialen Richtung (Y) kleiner als die Breite der entsprechenden der drehbaren ringförmigen Nuten (34) in der radialen Richtung (Y) ist, wobei die zweiten ringförmigen Segmente (43) von wenigstens einem benachbarten Paar der Dichtungselemente (40) so gedrückt werden, dass sie in Kontakt mit den Nut definierenden Oberflächen (341) stehen, die jeweils sind das entsprechende Paar der drehbaren ringförmigen Nuten (34) definieren, wenn das unter Druck stehende Öl in den Spalt (90) eingeleitet wird.

6. Hydraulisches Spannfutter nach Anspruch 5, ferner **gekennzeichnet durch** ein erstes Einwegeventil (70), das in dem Hauptkörper (301) des Drehsitzes (30) montiert ist und das auf dem ersten Ölpfad (32) angeordnet ist, wobei das erste Einwegeventil (70) es dem unter Druck stehenden Öl erlaubt, von dem ersten Öleinlasskanal (22) in den Betriebsraum (303) dadurch zu fließen, und verhindert, dass das unter Druck stehende Öl dadurch von dem Betriebsraum (303) zum ersten Öleinlasskanal (22) zurückfließt.

7. Hydraulisches Spannfutter nach Anspruch 6, ferner **gekennzeichnet durch** ein zweites Einwegeventil (80), das in dem Hauptkörper (301) des Drehsitzes (30) montiert ist und das auf dem zweiten Ölpfad (33) angeordnet ist, wobei das zweite Einwegeventil (80) es dem unter Druck stehenden Öl erlaubt, von dem zweiten Öleinlasskanal (23) in den Betriebsraum (303) dadurch zu fließen, und verhindert, dass das unter Druck stehende Öl dadurch von dem Betriebsraum (303) zum zweiten Öleinlasskanal (23) zurückfließt.

8. Hydraulisches Spannfutter nach Anspruch 1, **dadurch gekennzeichnet, dass** für jedes der Dichtungselemente (40) die Dicke (t2) des zweiten ringförmigen Segments (43) in Richtung der Mittelachse (L) kleiner ist als die Dicke (t1) des ersten ringförmigen Segments (42) in Richtung der Mittelachse (L).

## Revendications

1. Mandrin hydraulique adapté pour saisir au moins une pièce à usiner, comprenant :
un corps de mandrin (10) ;
un siège fixe (20) monté de manière fixe sur ledit corps de mandrin (10) et ayant une surface latérale (21) ;
un siège rotatif (30) monté sur ledit siège fixe (20) et pouvant tourner par rapport audit siège fixe (20) autour d'un axe central (L), ledit siège rotatif (30) ayant une surface latérale (31) qui est orientée vers ladite surface latérale (21) dudit siège fixe (20), ladite surface latérale (21) dudit siège fixe (20) et ladite surface latérale (31) dudit siège rotatif (30) définissant, par coopération, un espace (90) entre elles qui permet à l'huile sous pression de s'écouler à travers ce dernier ;
une pluralité d'éléments de joint d'étanchéité flexibles (40), chacun étant centré au niveau de l'axe central (L), et une unité d'ensemble d'entraînement (50) montée de manière mobile sur ledit siège rotatif (30) et déplacée par l'huile sous pression pour saisir ou libérer la pièce à usiner,
**caractérisé en ce que** :
chaque élément de joint d'étanchéité flexible a un premier segment annulaire (42) qui est monté de manière fixe sur ledit siège fixe (20), un segment de col (41) qui s'étend à partir dudit premier segment annulaire (42) et passant par ledit espace (90), et un second segment annulaire (43) qui est raccordé à une extrémité dudit segment de col (41) à distance dudit premier segment annulaire (42), qui est disposé de manière adjacente audit siège rotatif (30) et qui coopère avec ledit premier segment annulaire (42) et ledit segment de col (41) pour définir au moins une rainure d'huile (44) parmi ces derniers, lesdits seconds segments annulaires (43) d'au moins une paire adjacente desdits éléments de joint d'étanchéité (40) étant poussés pour être en contact avec ledit siège rotatif (30) lorsque l'huile sous pression est introduite dans ledit espace (90), lesdits seconds segments annulaires (43) desdits éléments de joint d'étanchéité (40) étant espacés dudit siège rotatif (30) lorsque l'huile sous pression a cessé d'être introduite dans ledit espace (90).

2. Mandrin hydraulique selon la revendication 1, **caractérisé en ce que** ledit siège fixe (20) a en outre un premier canal d'entrée d'huile (22) qui a une première ouverture (221) formée à travers ladite surface latérale (21) dudit siège fixe (20), un second canal d'entrée d'huile (23) qui a une seconde ouverture (231) formée à travers ladite surface latérale (21) dudit siège fixe (20), une distance entre ladite première ouverture (221) dudit premier canal d'entrée d'huile (22) et l'axe central (L) étant différente de celle entre ladite seconde ouverture (231) dudit second canal d'entrée d'huile (23) et l'axe central (L), ledit siège rotatif (30) comprenant un corps principal (301), et un corps auxiliaire (302) qui est monté de manière co-rotative sur ledit corps principal (301) et qui coopère avec ledit corps principal (301) pour définir un espace de fonctionnement (303) entre eux, ledit corps principal (301) ayant ladite surface latérale (31) dudit siège rotatif (30), une première trajectoire d'huile (32) qui est en communication de fluide avec ledit espace de fonctionnement (303) et ledit premier canal d'entrée d'huile (22) et qui a une première ouverture (321) formée à travers ladite surface latérale (31) dudit siège rotatif (30), une seconde trajectoire d'huile (33) qui est en communication de fluide avec ledit espace de fonctionnement (303) et ledit second canal d'entrée d'huile (23) et qui a une seconde ouverture (331) formée à travers ladite surface latérale (31) dudit siège rotatif (30), une distance entre ladite première ouverture (321) de ladite première trajectoire d'huile (32) et l'axe central (L) étant différente de celle entre ladite seconde ouverture (331) de ladite seconde trajectoire d'huile (33) et l'axe central (L), ladite première trajectoire d'huile (32) et ladite seconde trajectoire d'huile (33) étant respectivement en communication de fluide avec deux extrémités opposées dudit espace de fonctionnement (303) le long de l'axe central (L).

3. Mandrin hydraulique selon la revendication 2, **caractérisé en outre en ce qu'**une distance entre au moins l'un desdits éléments de joint d'étanchéité (40) et l'axe central (L) est supérieure à l'une ou l'autre parmi la distance entre ladite première ouverture (321) de ladite première trajectoire d'huile (32) et l'axe central (L) et la distance entre ladite seconde ouverture (331) de ladite seconde trajectoire (33) et l'axe central (L), une distance entre au moins l'un desdits éléments de joint d'étanchéité (40) et l'axe central (L) est inférieure à l'une ou l'autre parmi la distance entre ladite première ouverture (321) de ladite première trajectoire d'huile (32) et l'axe central (L) et la distance entre ladite seconde ouverture (331) de ladite seconde trajectoire d'huile (33) et l'axe central (L), et une distance entre au moins l'un desdits éléments de joint d'étanchéité (40) et l'axe central (L) se trouve entre la distance entre ladite première ouverture (321) de ladite première trajectoire d'huile (32) et l'axe central (L) et la distance entre ladite seconde ouverture (331) de ladite seconde trajectoire d'huile (33) et l'axe central (L).

4. Mandrin hydraulique selon la revendication 3, **caractérisé en outre en ce qu'**une distance entre un seul desdits éléments de joint d'étanchéité (40) et l'axe central (L) se trouve entre la distance entre ladite première ouverture (321) de ladite première trajectoire d'huile (32) et l'axe central (L) et la distance entre ladite seconde ouverture (331) de ladite seconde trajectoire d'huile (33) et l'axe central (L).

5. Mandrin hydraulique selon la revendication 4, **caractérisé en outre en ce que** ladite surface latérale (21) dudit siège fixe (20) et ladite surface latérale (31) dudit siège rotatif (30) sont perpendiculaires à l'axe central (L), ledit siège fixe (20) ayant en outre une pluralité de rainures annulaires fixes (24) qui sont formées dans ladite surface latérale (21) dudit siège fixe (20), une distance entre au moins l'une desdites rainures annulaires fixes (24) et l'axe central (L) étant supérieure à l'une ou l'autre parmi la distance entre ladite première ouverture (221) dudit premier canal d'entrée d'huile (22) et l'axe central (L) et la distance entre ladite seconde ouverture (231) dudit second canal d'entrée d'huile (23) et l'axe central (L), une distance entre au moins l'une desdites rainures annulaires fixes (24) et l'axe central (L) étant inférieure à l'une ou l'autre parmi la distance entre ladite première ouverture (221) dudit premier canal d'entrée d'huile (22) et l'axe central (L) et la distance entre ladite seconde ouverture (231) dudit second canal d'entrée d'huile (23) et l'axe central (L), une distance entre une seule desdites rainures annulaires fixes (24) et l'axe central (L) se trouvant entre la distance entre ladite première ouverture (221) dudit premier canal d'entrée d'huile (22) et l'axe central (L) et la distance entre ladite seconde ouverture (231) dudit second canal d'entrée d'huile (23) et l'axe central (L), ledit premier segment annulaire (42) de chacun desdits éléments d'étanchéité (40) étant monté de manière fixe sur une rainure respective desdites rainures annulaires fixes (24), ledit corps principal (31) dudit siège rotatif (30) ayant en outre une pluralité de rainures annulaires rotatives (34) qui sont formées dans ladite surface latérale (31) dudit siège rotatif (30) et qui sont respectivement alignées avec lesdites rainures annulaires fixes (24) dans la direction de l'axe central (L), ledit second segment annulaire (42) de chacun desdits éléments de joint d'étanchéité (40) étant retenu de manière mobile dans une rainure correspondante desdites rainures annulaires rotatives (34), chacune desdites rainures annulaires rotatives (34) étant définie par une surface de définition de rainure (341), pour chacun desdits éléments de joint d'étanchéité (40), l'épaisseur dudit second segment annulaire (43) dans une direction radiale (Y) est inférieure à la largeur de la rainure correspondante desdites rainures annulaires rotatives (34) dans la direction radiale (Y), lesdits seconds segments annulaires (43) d'au moins une paire adjacente desdits éléments de joint d'étanchéité (40) étant poussés pour être en contact avec lesdites surfaces de définition de rainure (341) qui définissent respectivement la paire correspondante desdites rainures annulaires rotatives (34) lorsque l'huile sous pression est introduite dans ledit espace (90).

6. Mandrin hydraulique selon la revendication 5, **caractérisé en outre par** une première valve à une voie (70) qui est montée dans ledit corps principal (301) dudit siège rotatif (30) et qui est disposée sur ladite première trajectoire d'huile (32), ladite première valve à une voie (70) permettant à l'huile sous pression de s'écouler dudit premier canal d'entrée d'huile (22) dans ledit espace de fonctionnement (303) à travers ce dernier, et empêchant l'huile sous pression de s'écouler dudit espace de fonctionnement (303) à nouveau dans ledit premier canal d'entrée d'huile (22) à travers ce dernier.

7. Mandrin hydraulique selon la revendication 6, **caractérisé en outre par** une seconde valve à une voie (80) qui est montée dans ledit corps principal (301) dudit siège rotatif (30) et qui est disposée sur ladite seconde trajectoire d'huile (33), ladite seconde valve à une voie (80) permettant à l'huile sous pression de s'écouler dudit second canal d'entrée d'huile (23) dans ledit espace de fonctionnement (303) à travers ce dernier, et empêchant l'huile sous pression de s'écouler dudit espace de fonctionnement (303) à nouveau dans ledit second canal d'entrée d'huile (23) à travers ce dernier.

8. Mandrin hydraulique selon la revendication 1, **caractérisé en ce que** pour chacun desdits éléments de joint d'étanchéité (40), l'épaisseur (t2) dudit second segment annulaire (43) dans la direction de l'axe central (L) est inférieure à l'épaisseur (t1) dudit premier segment annulaire (42) dans la direction de l'axe central (L).
